# DEMANDE DE BREVET EUROPEEN

(11) **EP 0 703 475 A1**
(43) Date de publication de la demande: **27.03.1996**
(21) Numéro de dépôt: 95402106.9
(22) Date de dépôt: 19.09.1995
(51) Int. Cl.: G02B 6/34

(54) **Coupleur optique sélectif en longueur d'onde, à fibre optique multicoeurs**

(30) Priorité: 21.09.1994 FR 9411252
(71) Demandeur: FRANCE TELECOM, F-75015 Paris (FR)
(72) Inventeur: Grosso, Philippe, F-22300 Lannion (FR); Botton, Claude, F-22300 Ploubezre (FR)
(74) Mandataire: Dubois-Chabert, Guy

(57) **Abrégé**

Ce coupleur comprend une fibre optique monomode (G) à au moins deux coeurs (c1, c2) de caractéristiques opto-géométriques différentes, et au moins un moyen de courbure (C) de la fibre sur une longueur (L) de fibre choisie, avec la courbure, de manière qu'une lumière de longueur d'onde déterminée, se propageant dans l'un des coeurs, se retrouve en totalité dans l'autre après avoir parcouru toute cette longueur de fibre. Application au multiplexage et au démultiplexage en longueur d'onde.

## Description

La présente invention concerne un coupleur optique sélectif en longueur d'onde, utilisant une fibre optique à pluralité de coeurs.

Elle s'applique notamment au domaine des télécommunications optiques et, plus particulièrement, au multiplexage et au démultiplexage en longueur d'onde.

Les réseaux de télécommunications, qui sont fondés sur le multiplexage en longueur d'onde, utilisent des longueurs d'onde ("canaux") espacées de quelques nanomètres les unes des autres.

Les dispositifs de multiplexage et de démultiplexage appropriés à ces réseaux de télécommunications doivent donc posséder une bande passante très étroite qui, à -20 dB, est de l'ordre de deux fois l'écartement des canaux.

On peut classer les dispositifs de multiplexage et de démultiplexage en deux catégories, à savoir les dispositifs fixes et les dispositifs accordables, suivant que la longueur d'onde sélectionnée est réglable ou non.

Différents dispositifs permettent d'obtenir un filtrage en longueur d'onde satisfaisant pour le multiplexage et le démultiplexage en longueur d'onde dans les réseaux de télécommunications :
- les filtres de Fabry-Perot qui sont fixes ou qui sont accordables électriquement lorsque les miroirs qu'ils comprennent sont montés sur des dispositifs piézoélectriques,
- les filtres multicouches qui ne sont pas accordables,
- les filtres à réseau de diffraction qui sont fixes ou qui sont accordables mécaniquement par inclinaison du réseau,
- les filtres utilisant des moyens acousto-optiques qui sont accordables électriquement.

Ces dispositifs connus utilisent des composants de grande précision qui sont très coûteux.

De plus, ces dispositifs entraînent des pertes de puissance lumineuse excessives (de l'ordre de 10 dB) sur toutes les longueurs d'onde transportées sur les réseaux de télécommunications dans lesquels se trouvent ces dispositifs.

De ce fait, on est obligé d'associer aux dispositifs de multiplexage en longueur d'onde dont il était question plus haut des moyens d'amplification optique.

Ces moyens d'amplification optique sont coûteux.

La présente invention a pour but de remédier aux inconvénients précédents en proposant un coupleur optique sélectif en longueur d'onde qui est applicable au multiplexage et au démultiplexage en longueur d'onde et qui utilise une fibre optique monomode multicoeurs.

De façon précise, la présente invention a pour objet un coupleur optique sélectif en longueur d'onde, caractérisé en ce qu'il comprend :
- une fibre optique monomode à au moins deux coeurs adjacents dont les caractéristiques opto-géométriques respectives sont différentes, et
- au moins un moyen de courbure de la fibre optique, dans un plan contenant les axes respectifs des deux coeurs et sur une longueur de fibre de l'ordre de 0,5 m ou plus, cette longueur de fibre et la courbure étnt choisies de manière qu'une lumière de longueur d'onde déterminée, se propageant dans l'un des coeurs, se retrouve en totalité dans l'autre coeur après avoir parcouru toute cette longueur de fibre.

Le coupleur optique objet de l'invention est susceptible d'avoir une bande passante très étroite de l'ordre de quelques nanomètres (moins de 10 nm).

En outre, le coupleur optique objet de l'invention est bien moins coûteux que les dispositifs connus de multiplexage et de démultiplexage en longueur d'onde, qui ont été mentionnés plus haut.

Ce coupleur optique utilisable pour le multiplexage et le démultiplexage en longueur d'onde, n'entraîne quasiment aucune perte de puissance lumineuse du fait de sa conception (la seule cause d'atténuation étant la classique atténuation linéique d'une fibre optique, qui est négligeable sur quelques mètres).

Selon un mode de réalisation préféré du coupleur optique objet de l'invention, la fibre optique comprend :
- au moins deux guides optiques élémentaires monomodes qui comprennent chacun l'un des deux coeurs et une gaine optique qui entoure ce coeur, et
- une matrice à contour extérieur non circulaire, dans laquelle se trouve les guides optiques élémentaires,

et en ce que ces guides optiques élémentaires sont placés de façon très précise en des positions définies à quelques dixièmes de micromètre près, les uns par rapport aux autres dans la matrice et par rapport au contour extérieur de celle-ci et ont des caractéristiques géométriques de grande précision, le diamètre de coeur et le diamètre de gaine optique de chaque guide optique élémentaire étant définis à quelques dixièmes de micromètre près et l'excentrement entre ce coeur et cette gaine optique étant de l'ordre du dixième de micromètre.

En fait, la fibre optique multicoeurs utilisée dans ce mode de réalisation préféré est celle qui est décrite dans le document suivant auquel on se reportera :
(1) EP-A-0 611 973, "Guides optiques multicoeurs de grande précision et de petites dimensions et procédé de fabrication de ces guides", (Invention de Georges Le Noane, Philippe Grosso et Isabelle Hardy).

La fibre optique multicoeurs décrite dans ce document (1) n'est pas circulaire.

De ce fait, il est possible de la positionner de façon aisée et précise, ce qui facilite la mise en oeuvre du coupleur optique objet de l'invention.

Il est possible d'enrouler cette fibre optique sur une grande longueur tout en repérant facilement les axes respectifs de coeurs adjacents de cette fibre du fait de la non-circularité de celle-ci.

En outre, la fibre optique multicoeurs décrite dans le document (1) a une très grande précision géométrique, ce qui est très important pour coupler cette fibre à d'autres fibres multicoeurs monomodes ou à des composants opto-électroniques.

La fibre décrite dans ce document (1) est ainsi particulièrement appropriée à la mise en oeuvre de la présente invention.

Selon un premier mode de réalisation particulier du coupleur optique objet de l'invention, la courbure de la fibre optique est fixe.

Dans ce cas, le moyen de courbure peut comprendre un élément pourvu d'une rainure courbe ou hélicoïdale, destinée à recevoir la fibre optique.

Selon un deuxième mode de réalisation particulier du coupleur optique objet de l'invention, la courbure de la fibre optique est réglable.

Dans ce cas, le moyen de courbure peut comprendre :
- un élément pourvu d'une rainure courbe ou hélicoïdale, destinée à recevoir la fibre optique, et
- des moyens de variation de la courbure de cette rainure.
   Les moyens de variation de la courbure de la rainure peuvent comprendre :
- une fente formée à travers l'élément, perpendiculairement au plan de la rainure, et
- un moyen de variation de la largeur de la fente.

Dans la présente invention, le rayon de courbure de la fibre optique multicoeurs détermine la longueur d'onde filtrée.

Ainsi, une même fibre optique multicoeurs permet de réaliser facilement des filtres accordés à des longueurs d'onde différentes, en particulier dans les deux "fenêtres" des télécommunications optiques.

On peut réaliser un coupleur optique conforme à l'invention comprenant une pluralité de moyens de courbure de la fibre optique, prévus pour permettre à une pluralité de lumières de longueurs d'onde respectives différentes, injectées dans un même coeur à une extrémité de la fibre, de se retrouver dans des coeurs différents à l'autre extrémité de cette fibre.

La présente invention sera mieux comprise à la lecture de la description d'exemples de réalisation donnés ci-après, à titre purement indicatif et nullement limitatif, en faisant référence aux dessins annexés, sur lesquels :
- la figure 1 est une vue en coupe transversale schématique d'une fibre optique monomode à deux coeurs, utilisable dans un coupleur optique conforme à l'invention,
- la figure 2 est une vue schématique d'un mode de réalisation particulier du coupleur optique objet de l'invention utilisant la fibre optique de la figure 1,
- la figure 3 est une vue schématique d'un moyen de courbure qui est utilisable dans la présente invention pour courber cette fibre,
- la figure 4 est une vue schématique d'un autre moyen de courbure utilisable dans l'invention,
- la figure 5 est une vue en coupe transversale schématique d'une fibre optique monomode à trois coeurs, utilisable dans la présente invention,
- la figure 6 est une vue schématique d'un coupleur optique conforme à l'invention utilisant la fibre optique de la figure 5, et
- les figures 7 et 8 sont des vues schématiques d'autres moyens de courbure utilisables dans la présente invention.

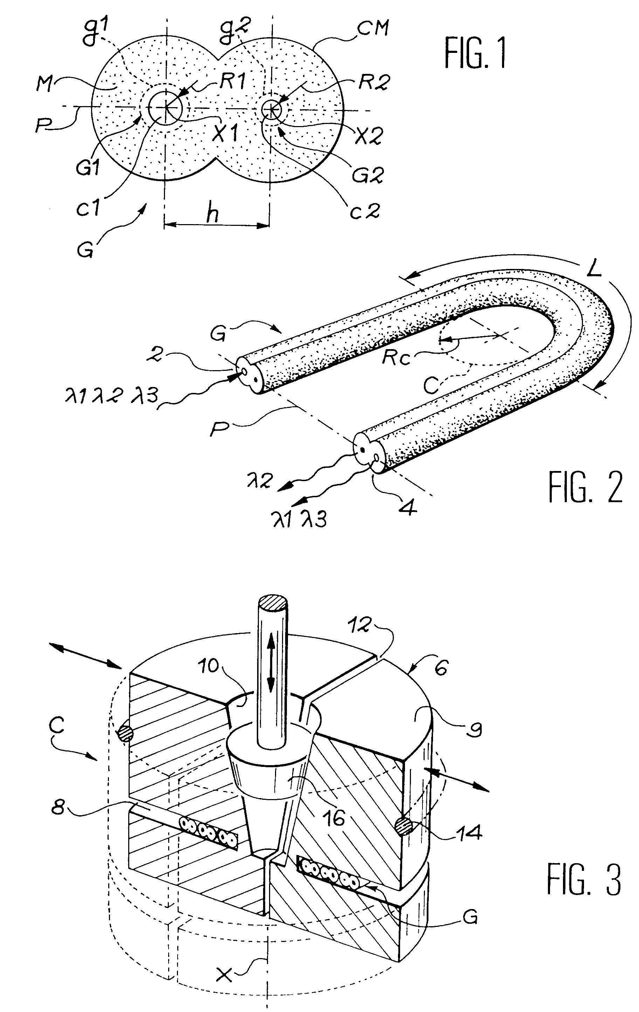

La fibre optique multicoeurs G, ou guide optique multicoeurs, qui est schématiquement représentée en coupe transversale sur la figure 1, comprend deux guides optiques élémentaires G1 et G2 qui comportent respectivement deux coeurs c1 et c2, ces coeurs étant respectivement entourés de gaines optiques g1 et g2.

Les axes des coeurs c1 et c2, qui portent respectivement les références X1 et X2, sont parallèles et constituent aussi les axes des guides élémentaires.

La fibre optique multicoeurs G comprend également une matrice M dans laquelle se trouvent les guides élémentaires.

Le contour CM de la matrice M a, vu en coupe transversale, une forme non circulaire et se compose de deux arcs de cercle respectivement centrés sur les axes X1 et X2 et symétriques l'un de l'autre par rapport au plan médiateur de ces axes comme on le voit sur la figure 1.

Les coeurs sont disposés l'un par rapport à l'autre à une distance connue avec une précision de l'ordre de quelques dixièmes de micromètre près.

Ces coeurs sont également situés très précisément par rapport au contour CM (à quelques dixièmes de micromètre près).

Pour chacun des guides optiques élémentaires G1 et G2, les diamètres du coeur et de la gaine optique correspondants sont définis à quelques dixièmes de micromètre près.

La précision sur le rayon des arcs de cercles constituant le contour CM est de quelques dixièmes de micromètre.

Pour plus de précisions sur une telle fibre optique multicoeurs et sur un procédé de fabrication de celle-ci, on se reportera au document (1) déjà cité.

Les rayons respectifs des coeurs c1 et c2 sont notés R1 et R2 et la distance entre les axes X1 et X2 est notée h sur la figure 1.

La différence entre l'indice optique du coeur c1 et l'indice optique de la gaine optique g1 correspondante est notée Δn1.

La différence entre l'indice optique du coeur c2 et l'indice optique de la gaine optique g2 correspondante est notée Δn2.

Dans la fibre optique multicoeurs G, qui est utilisable dans la présente invention, les guides optiques élémentaires G1 et G2 ont des caractéristiques opto-géométriques différentes l'une de l'autre.

Ceci signifie que les rayons R1 et R2 sont différents l'un de l'autre et/ou que les différences d'indices optiques Δn1 et Δn2 sont différentes l'une de l'autre.

Du fait de cette différence entre les caractéristiques opto-géométriques des guides optiques élémentaires de la fibre G, tant que cette fibre multicoeurs G est droite c'est-à-dire non courbée, il ne peut y avoir de couplage optique entre les coeurs de celle-ci.

En revanche, si cette fibre à deux coeurs est courbée dans le plan P contenant les axes X1 et X2 des coeurs, les caractéristiques de propagation de ces deux coeurs sont modifiées et ce, de manière différente en fonction de la longueur d'onde.

Dans ce cas, en courbant la fibre G à deux coeurs sur une longueur L suffisante, la puissance optique transportée à cette longueur d'onde est totalement transférée d'un coeur à l'autre au bout de cette longueur L ou distance d'enroulement.

On a représenté schématiquement sur la figure 2 un coupleur optique sélectif en longueur d'onde conforme à l'invention, comprenant la fibre optique G à deux coeurs et un moyen C de courbure de cette fibre avec le rayon de courbure Rc, dans le plan P contenant les axes des coeurs et sur la distance L.

En considérant des lumières de longueurs d'onde respectives λ1, λ2 et λ3 qui sont injectées dans l'un des deux coeurs à une extrémité 2 de la fibre G, l'une des lumières, par exemple celle de longueur d'onde λ2, est totalement transférée dans l'autre coeur après avoir parcouru la distance L tandis que les deux autres lumières de longueur d'onde respectives λ1 et λ3 demeurent dans le coeur où elles avaient été injectées comme on le voit sur la figure 2.

Le coupleur sélectif conforme à l'invention, schématiquement représenté sur la figure 2, permet ainsi un démultiplexage en longueur d'onde.

Il permet bien entendu un multiplexage en longueur d'onde,c'est-à-dire qu'en injectant les lumières de longueurs d'onde respectives λ1 et λ3 dans l'un des deux coeurs, à l'autre extrémité 4 de la fibre, et la lumière de longueur d'onde λ2 dans l'autre coeur, à cette même extrémité 4, on récupère, à l'autre extrémité 2 de la fibre et dans un seul coeur, les lumières de longueurs d'onde respectives λ1, λ2 et λ3.

Le principe du couplage optique sélectif au moyen de guides optiques courbes, de caractéristiques opto-géométriques différentes, est exposé dans le document suivant auquel on se reportera :
(2) Yasuji Murakami, "Coupling between Curved Dielectric Waveguides", Applied Optics, vol. 19, n°3, 1er février 1980, p. 398 à 403.

Ce document (2) permet la détermination du rayon de courbure Rc mentionné plus haut.

Cependant, ce document (2) ne donne aucune solution pour l'obtention d'un couplage sélectif à bande passante étroite.

L'invention résout justement ce problème au moyen d'une fibre optique monomode à pluralité de coeurs.

En effet, avec le principe exposé dans le document (2), une bande passante étroite nécessite un couplage faible entre deux coeurs adjacents.

Ce couplage est caractérisé par un coefficient de couplage et la distance L sur laquelle le guide optique contenant ces deux coeurs doit être courbé pour extraire la longueur d'onde souhaitée est inversement proportionnelle à ce coefficient de couplage.

Une bande passante étroite nécessite un faible coefficient de couplage et donc une courbure sur une grande longueur.

Pour obtenir une bande passante de quelques nanomètres, il convient de courber un multiguide optique sur une longueur allant d'environ 0,5 m à quelques mètres.

Aucune technique classique ne permet de réaliser un multiguide courbé sur une telle longueur.

La présente invention résout justement ce problème par l'utilisation d'une fibre optique multicoeurs monomode.

On a représenté schématiquement sur la figure 3 un exemple de moyen de courbure C de la fibre G à deux coeurs.

Ce moyen de courbure comprend un élément 6 en forme de cylindre de révolution autour d'un axe X.

Cet élément comprend une rainure circulaire 8 dont le plan est perpendiculaire à l'axe X et dans laquelle la fibre optique G est enroulée sur la longueur L mentionnée précédemment.

La profondeur de la rainure est calculée de façon à obtenir la courbure voulue pour la fibre.

Compte tenu de la distance sur laquelle la fibre doit être courbée, il est possible qu'il faille faire plusieurs tours à cette fibre dans la rainure de l'élément 6.

Ainsi, à chaque tour la courbure change mais d'une très faible quantité, compte tenu des très faibles dimensions de la fibre multicoeurs G (en coupe transversale).

En effet, celle-ci est réalisable de façon à être inscriptible (en coupe transversale) dans un cercle de 125 µm de diamètre par exemple.

On obtient ainsi un coupleur conforme à l'invention dont la longueur d'onde de couplage est invariable.

On peut réaliser un autre coupleur conforme à l'invention qui est accordable mécaniquement.

Pour ce faire, on forme dans l'élément 6, à partir d'une face 9 de celui-ci, un trou conique 10 d'axe X, qui va en se rétrécissant au moins jusqu'au plan de la rainure 8.

De plus, cet élément est fendu en deux suivant un plan diamétral, la fente correspondante portant la référence 12 sur la figure 3.

Les deux moitiés d'élément qui en résultent sont rendues solidaires l'une de l'autre au moyen d'une rondelle élastique fendue 14 qui encercle l'élément 6 comme on le voit sur la figure 3.

On comprend qu'en écartant plus ou moins ces deux moitiés l'une de l'autre, on puisse faire varier la courbure de la fibre optique placée dans la rainure 8.

Pour obtenir cet écartement variable, on munit l'élément 6 d'un organe 16 en forme de coin que l'on déplace dans le trou 10 suivant l'axe X de l'élément 6.

En choisissant convenablement la position de l'organe 16 dans le trou 10, on peut obtenir la courbure souhaitée pour la fibre optique G.

On dispose ainsi d'un moyen de courbure de la fibre qui permet d'ajuster le rayon de courbure de celle-ci pour obtenir un couplage à une longueur d'onde souhaitée.

On obtient donc un dispositif de multiplexage et de démultiplexage qui est accordable mécaniquement.

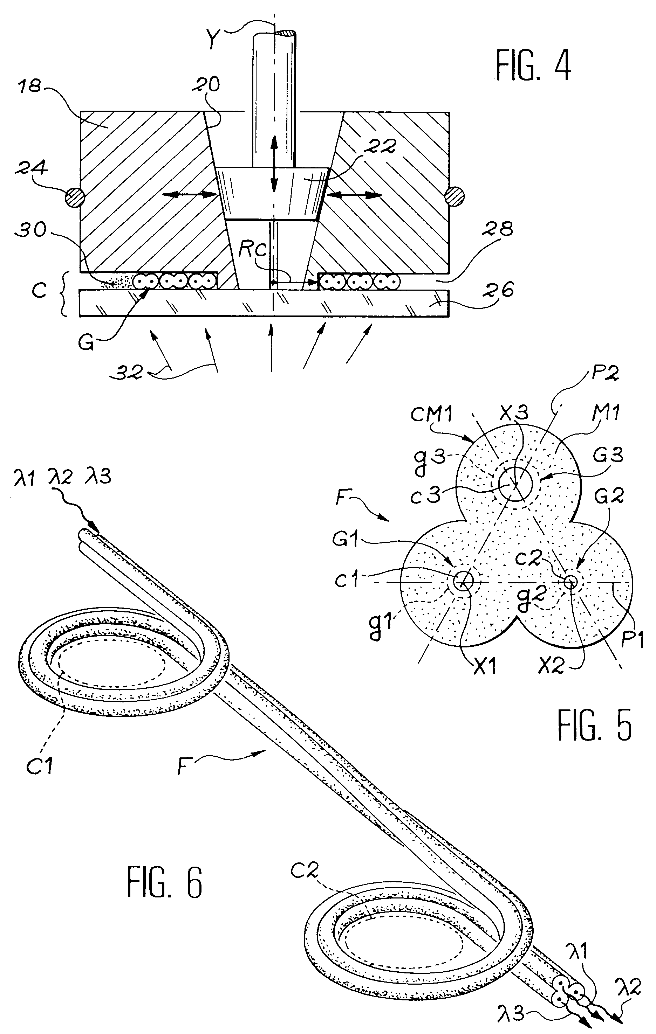

Sur la figure 4, on a représenté schématiquement un autre exemple de moyen de courbure C utilisable dans la présente invention.

Le moyen de courbure de la figure 4, qui permet de réaliser un coupleur optique conforme à l'invention à une longueur d'onde fixe, utilise un élément 18 cylindrique de révolution autour d'un axe Y.

Cet élément 18 est fendu en deux suivant un plan diamétral et comprend un perçage conique 20 d'axe Y, allant d'une face à l'autre de cet élément 18.

De plus, comme dans le cas de la figure 3, une rondelle élastique fendue 24 entoure l'élément 18 pour rendre solidaires l'une de l'autre les deux moitiés de l'élément 18.

Un organe 22 en forme de coin est déplaçable suivant l'axe Y dans le perçage conique pour faire varier l'ouverture de la fente de l'élément 18 comme on le voit sur la figure 4.

Une plaque de verre 26 est placée contre la face de l'élément 18 correspondant à la partie la plus étroite du perçage 20 comme on le voit sur la figure 4.

Du côté de la plaque de verre 26, le diamètre de l'élément 18 est réduit, d'où l'obtention d'une rainure 28 délimitée par cet élément et la plaque de verre 26.

C'est dans cette rainure 28 que l'on enroule la fibre optique G.

En vue de coller la fibre optique à la plaque de verre, on introduit dans cette rainure une colle 30 polymérisable par un rayonnement ultraviolet.

On précise que l'élément 18 est fait d'un matériau auquel la colle polymérisée n'adhère pas.

On ajuste ensuite, de façon dynamique, le rayon de courbure Rc de la fibre G à la longueur d'onde voulue pour le couplage.

Pour ce faire, on utilise l'organe en forme de coin 22.

Lorsque ce rayon de courbure est obtenu, on envoie un rayonnement ultraviolet approprié 32 à travers la plaque de verre 26 comme on le voit sur la figure 4, ce qui polymérise la colle.

La fibre optique G (en silice) est ainsi fixée à la plaque de verre 26.

On retire ensuite l'élément 18 muni de l'organe en forme de coin et de la rondelle élastique.

On dispose ainsi d'un coupleur sélectif C conforme à l'invention, permettant un multiplexage et un démultiplexage non accordables en longueur d'onde.

A titre purement indicatif et nullement limitatif, on peut utiliser une fibre optique monomode à deux coeurs correspondant aux paramètres suivants :
h = 30 µm,
2R1 = 7 µm,
Δn1 = 7 x 10⁻³,
2R2 = 8 µm,
Δn2 = 5 x 10⁻³.

Pour filtrer une longueur d'onde de 1,55 µm, on utilise alors un rayon de courbure Rc égal à 42,5 mm et la fibre optique monomode à deux coeurs est courbée sur une longueur de 2,8 m, ce qui correspond à environ 11 tours de fibre.

Une autre fibre optique monomode multicoeurs F, de grande précision géométrique, utilisable pour réaliser un coupleur optique conforme à l'invention, est schématiquement représentée en coupe transversale sur la figure 5.

Cette fibre optique F comprend trois guides optiques élémentaires G1, G2 et G3 qui comprennent respectivement trois coeurs c1, c2 et c3, ces coeurs étant respectivement entourés de gaines optiques g1, g2 et g3.

Les axes des coeurs c1, c2 et c3 portent respectivement les références X1, X2 et X3, sont parallèles et constituent aussi les axes des guides élémentaires.

La fibre F comprend également une matrice M1 à contour extérieur CM1 non circulaire, dans laquelle se trouvent les guides élémentaires.

Dans l'exemple représenté sur la figure 5, les axes X1, X2 et X3 constituent, en coupe transversale, les sommets d'un triangle équilatéral.

La fibre F est encore du genre de celles qui sont décrites dans le document (1) mentionné plus haut.

Les caractéristiques opto-géométriques des guides optiques élémentaires de la fibre F sont différentes les unes des autres pour pouvoir utiliser la fibre F dans un coupleur conforme à l'invention.

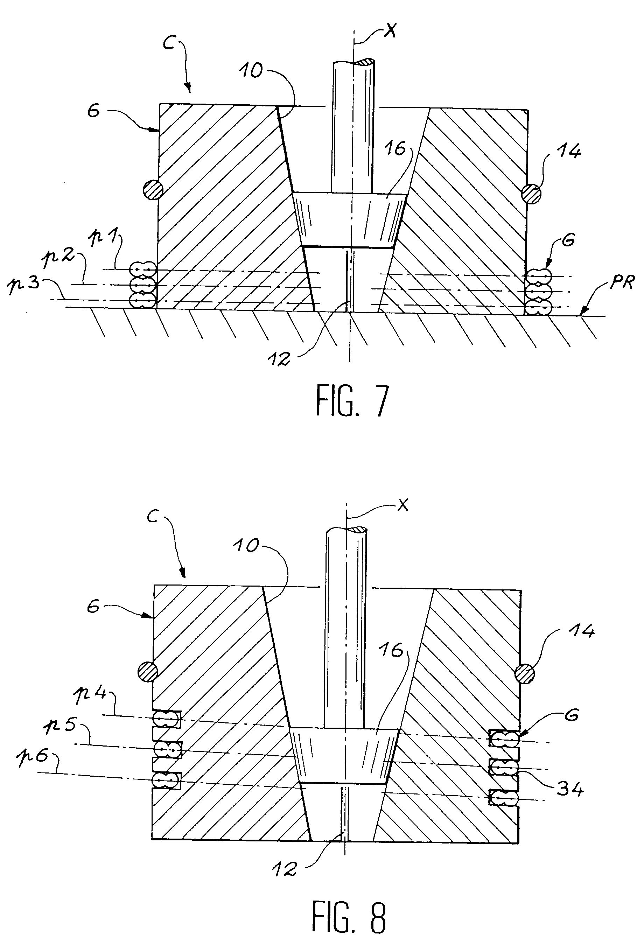

Un tel coupleur est schématiquement représenté sur la figure 6.

Il comprend, en plus de la fibre optique F à trois coeurs, un premier moyen de courbure C1 de cette fibre et un deuxième moyen C2 de courbure de la fibre F.

Le moyen de courbure C1 est prévu pour courber la fibre F dans un plan P1 (figure 5) contenant les axes X1 et X2 des coeurs c1 et c2, avec un rayon de courbure permettant le couplage d'une longueur d'onde déterminée du coeur c1 au coeur c2 et sur une longueur suffisante pour permettre un transfert total d'une lumière ayant cette longueur d'onde du coeur c1 au coeur c2.

Le moyen de courbure C2 est prévu pour courber la fibre optique F dans un plan P2 (figure 5) contenant les axes X1 et X3 des coeurs c1 et c3, avec un rayon de courbure permettant le couplage d'une autre longueur d'onde déterminée du coeur c1 au coeur c3 et sur une longueur suffisante pour permettre un transfert total d'une lumière ayant cette autre longueur d'onde du coeur c1 au coeur c3.

En disposant ces moyens de courbure C1 et C2 l'un à la suite de l'autre, on voit qu'en injectant des lumières de longueurs d'onde respectives λ1, λ2 et λ3 dans le coeur c1, à une extrémité de la fibre F, il est possible de transférer totalement l'une de ces lumières, par exemple celle de longueur λ2, du coeur c1 au coeur c2, après passage de cette lumière dans la partie de la fibre qui est courbée par le moyen C1 tandis que les lumières de longueur d'onde λ1 et λ3 restent dans le coeur c1.

Après passage de ces lumières de longueurs d'onde λ1 et λ3 dans la partie courbée de la fibre par le moyen C2, une lumière, par exemple celle de longueur d'onde λ3, se retrouve totalement dans le coeur c3, tandis que la lumière de longueur d'onde λ1 demeure dans le coeur c1.

On obtient ainsi un démultiplexage en longueur d'onde.

Bien entendu, en injectant à l'autre extrémité de la fibre F les lumières de longueur d'onde λ1, λ2 et λ3 respectivement dans les coeurs c1, c2 et c3, on obtient à l'autre extrémité de la fibre ces lumières dans le coeur c1.

Le coupleur optique conforme à l'invention, représenté sur la figure 6, permet ainsi un multiplexage et un démultiplexage en longueur d'onde.

Les moyens de courbure C représentés sur les figures 3 et 4 sont tels que la courbure de la fibre G est modifiée - de façon très faible - à chaque tour que fait cette fibre sur le moyen de courbure où elle se trouve.

On a représenté schématiquement, sur les figures 7 et 8, des moyens de courbure donnant à la fibre une courbure constante sur la longueur courbée de cette fibre.

La courbure de la fibre est alors constante sur plusieurs tours de fibre.

Le moyen de courbure C schématiquement représenté sur la figure 7 diffère de celui de la figure 3 par le fait que la rainure 8 y est supprimée : le moyen de courbure C représenté sur la figure 7 repose sur un support plan formant un plan de référence PR.

La fibre G est maintenue enroulée en hélice à spires jointives sur l'élément 6, à partir du plan de référence PR.

Ainsi, dans chaque tout de la fibre G, les axes des deux coeurs de celle-ci sont dans un même plan parallèle au plan PR.

Dans l'exemple représenté sur la figure 7, on a représenté trois tours de fibre et les plans correspondants portent respectivement les références p1, p2 et p3.

Grâce à l'organe en forme de coin 16, on obtient encore un dispositif accordable.

Le moyen de courbure C schématiquement représenté sur la figure 8 diffère également de celui de la figure 3 par le fait que la rainure 8 y est supprimée : le moyen de courbure C représenté sur la figure 8 comprend une rainure hélicoïdale 34 réalisée sur l'élément 6, autour de l'axe X de celui-ci.

La fibre G est enroulée dans cette rainure hélicoïdale 34.

Dans chaque tour de la fibre G, les axes des deux coeurs de celle-ci sont encore dans un même plan.

Dans l'exemple représenté sur la figure 8, on a représenté trois tours de fibre et les plans correspondants portent respectivement les références p4, p5 et p6.

Dans le cas de la figure 8, on obtient encore un dispositif accordable en longueur d'onde grâce à l'organe en forme de coin 16.

Dans les cas des figures 7 et 8, le couplage optique a encore lieu du fait que les axes des deux coeurs de la fibre ont des rayons de courbure différents l'un de l'autre dans chacun des plans p1 à p3 (ou p4 à p6) dans lesquels se trouvent successivement ces axes.

## Revendications

1. Coupleur optique sélectif en longueur d'onde, caractérisé en ce qu'il comprend :
- une fibre optique monomode (G ; F) à au moins deux coeurs adjacents (c1, c2 ; c1, c2, c3) dont les caractéristiques opto-géométriques respectives sont différentes, et
- au moins un moyen de courbure (C ; C1, C2) de la fibre optique, dans un plan (P ; P1, P2) contenant les axes respectifs (X1, X2 ; X1, X2, X3) des deux coeurs et sur une longueur (L) de fibre de l'ordre de 0,5 m ou plus, cette longueur de fibre et la courbure étant choisies de manière qu'une lumière de longueur d'onde déterminée, se propageant dans l'un des coeurs, se retrouve en totalité dans l'autre coeur après avoir parcouru toute cette longueur de fibre.

2. Coupleur optique selon la revendication 1, caractérisé en ce que la fibre optique comprend :
- au moins deux guides optiques élémentaires monomodes (G1, G2 ; G1, G2, G3) qui comprennent chacun l'un des deux coeurs et une gaine optique (g1, g2 ; g1, g2, g3) qui entoure ce coeur, et
- une matrice (M ; M1) à contour extérieur (CM ; CM1) non circulaire, dans laquelle se trouve les guides optiques élémentaires,
et en ce que ces guides optiques élémentaires sont placés de façon très précise en des positions définies à quelques dixièmes de micromètre près, les uns par rapport aux autres dans la matrice et par rapport au contour extérieur de celle-ci et ont des caractéristiques géométriques de grande précision, le diamètre de coeur et le diamètre de gaine optique de chaque guide optique élémentaire étant définis à quelques dixièmes de micromètre près et l'excentrement entre ce coeur et cette gaine optique étant de l'ordre du dixième de micromètre.

3. Coupleur optique selon l'une quelconque des revendications 1 et 2, caractérisé en ce que la courbure de la fibre optique (G ; F) est fixe.

4. Coupleur optique selon la revendication 3, caractérisé en ce que le moyen de courbure (C) comprend un élément (6) pourvu d'une rainure courbe (8) destinée à recevoir la fibre optique.

5. Coupleur optique selon la revendication 3, caractérisé en ce que le moyen de courbure (C) comprend un élément (6) pourvu d'une rainure hélicoïdale (34) destinée à recevoir la fibre optique.

6. Coupleur optique selon l'une quelconque des revendications 1 et 2, caractérisé en ce que la courbure de la fibre optique (G ; F) est réglable.

7. Coupleur optique selon la revendication 6, caractérisé en ce que le moyen de courbure comprend :
- un élément (6) pourvu d'une rainure (8) courbe destinée à recevoir la fibre optique, et
- des moyens (10, 12, 14, 16) de variation de la courbure de cette rainure.

8. Coupleur optique selon la revendication 6, caractérisé en ce que le moyen de courbure comprend :
- un élément (6) pourvu d'une rainure hélicoïdale (34) destinée à recevoir la fibre optique, et
- des moyens (10, 12, 14, 16) de variation de la courbure de cette rainure.

9. Coupleur optique selon l'une quelconque des revendications 7 et 8, caractérisé en ce que les moyens de variation de la courbure de la rainure comprennent :
- une fente (12) formée à travers l'élément (6), perpendiculairement au plan de la rainure (8), et
- un moyen (10, 14, 16) de variation de la largeur de la fente.

10. Coupleur optique selon l'une quelconque des revendications 1 à 9, caractérisé en ce qu'il comprend une pluralité de moyens (C1, C2) de courbure de la fibre optique (F), prévus pour permettre à une pluralité de lumières de longueurs d'onde respectives différentes, injectées dans un même coeur à une extrémité de la fibre, de se retrouver dans des coeurs différents à l'autre extrémité de cette fibre.
